# EUROPÄISCHE PATENTSCHRIFT

(11) **EP 0 799 866 B1**
(45) Veröffentlichungstag und Bekanntmachung des Hinweises auf die Patenterteilung: **05.12.2001**
(21) Anmeldenummer: 97104452.4
(22) Anmeldetag: 15.03.1997
(51) Int. Cl.: C09C 1/50, C08K 3/04

(54) **Russ und Verfahren zu Seiner Herstellung**
Carbon black and process for its manufacture
Noir de carbone et son procédé de fabrication

(30) Priorität: 04.04.1996 DE 19613796
(43) Veröffentlichungstag der Anmeldung: 08.10.1997
(73) Patentinhaber: Degussa AG, 40474 Düsseldorf (DE)
(72) Erfinder: Karl, Alfons, Dr., 63584 Gründau (DE); Vogel, Karl, Dr., 63755 Alzenau (DE); Freund, Burkhard, Dr., Erftstadt (DE)

(56) Entgegenhaltungen:
- EP-A- 0 384 080
- EP-A- 0 494 068
- EP-A- 0 507 254
- EP-A- 0 608 892
- WO-A-96/37447
- WO-A-96/37547
- WO-A-97/47698
- WO-A-98/13418
- DE-A- 1 948 443
- GB-A- 1 213 186
- DATABASE WPI Section Ch, Week 9815 Derwent Publications Ltd., London, GB; Class A26, AN 98-163744 XP002096271 & JP 10 030065 A (MITSUBISHI CHEM CORP) , 3. Februar 1998
- DATABASE WPI Section Ch, Week 9333 Derwent Publications Ltd., London, GB; Class E36, AN 93-261471 XP002096436 & JP 05 178604 A (MITSUBISHI KASEI CORP) , 20. Juli 1993

## Beschreibung

Die vorliegende Erfindung betrifft neuartige Ruße, die besonders als Verstärkerruße für die Gummi-Industrie geeignet sind sowie ein Verfahren zur Herstellung dieser Ruße.

Die industriell wichtigsten Ruß-Herstellverfahren beruhen auf der oxidativen Pyrolyse von kohlenstoffhaltigen Rußrohstoffen. Hierbei werden die Rußrohstoffe bei hohen Temperaturen in Anwesenheit von Sauerstoff unvollständig verbrannt. Zu dieser Klasse von Ruß-Herstellverfahren gehören zum Beispiel das Furnaceruß-Verfahren, das Gasruß-verfahren und das Flammruß-Verfahren. Als kohlenstoffhaltige Rußrohstoffe werden überwiegend mehrkernige aromatische Rußöle eingesetzt. Der Produktstrom der oxidativen Pyrolyse besteht aus einem Wasserstoff und Kohlenmonoxid enthaltenden Abgas und darin suspendiertem feinteiligen Ruß, der in einer Filteranlage vom Abgas abgetrennt wird. Der so gewonnene Ruß wird dann zur besseren Handhabung zum größten Teil in Naß- oder Trockengranulierverfahren als Perlruß konfektioniert. Die aus dem Herstellprozeß herrührende Feuchtigkeit des Rußes wird durch eine abschließende Trocknung auf unter 1 Gew.-% herabgesetzt.

Industriell hergestellte Ruße werden zu über 90 % als Füllstoff und als Verstärker bei der Herstellung von Gummimischungen für die Reifenindustrie eingesetzt. Typische Gummimischungen enthalten 20 bis 70 Gew.-% Natur- und/oder Synthesekautschuk, 20 bis 50 Gew.-% Ruß, Mineralöl und weitere Hilfsstoffe sowie Schwefel als Vulkanisations-mittel. Die Ruße beeinflussen mit ihren spezifischen Eigenschaften den Abriebwiderstand, den Rollwiderstand sowie das Naßrutschverhalten der fertigen Reifen. Für Gummimischungen, die als Laufflächen von Reifen dienen, sogenannte Laufflächenmischungen, wird ein hoher Abriebwiderstand bei gleichzeitig möglichst geringem Rollwiderstand und gutem Naßrutschverhalten gefordert. Ein geringer Rollwiderstand führt zu einem geringen Kraftstoffverbrauch des Kraftfahrzeugs

Rollwiderstand und Naßrutscheigenschaften werden durch das viskoelastische Verhalten der Laufflächenmischung beeinflußt. Bei periodischer Verformung kann das viskoelastische Verhalten durch den mechanischen Verlustfaktor tanδ und im Falle von Dehnung oder Stauchung durch den dynamischen Dehnmodul |E*| beschrieben werden. Beide Größen sind stark temperaturabhängig. Das Naßrutschverhalten der Laufflächenmischung wird dabei gemeinhin mit dem Verlustfaktor tanδ₀ bei etwa 0°C, der Rollwiderstand mit dem Verlustfaktor tanδ₆₀ bei etwa 60°C korreliert. Je höher der Verlustfaktor bei der tiefen Temperatur ist, um so besser ist gewöhnlich das Naßrutschverhalten der Reifenmischung. Zur Verminderung des Rollwiderstandes wird dagegen ein möglichst kleiner Verlustfaktor bei der hohen Temperatur gefordert.

Der Abriebwiderstand und die viskoelastischen Eigenschaften, also auch der Verlustfaktor der Laufflächenmischungen, werden wesentlich durch die Eigenschaften der eingesetzten Verstärkerruße bestimmt.

Eine wichtige Einflußgröße ist die spezifische Oberfläche, insbesondere die CTAB-Oberfläche, welche ein Maß für den kautschukwirksamen Oberflächenanteil des Rußes ist. Mit zunehmender CTAB-Oberfläche steigen Abriebwiderstand und tanδ an.

Weitere wichtige Rußparameter sind die DBP-Absorption als Maßzahl für die Ausgangsstruktur und die 24M4-DBP-Absorption als Maß für die nach mechanischer Beanspruchung des Rußes noch verbleibende Reststruktur.

Für Laufflächenmischungen sind Ruße geeignet, die CTAB-Oberflächen zwischen 80 und 180 m²/g und 24M4-DBP-Absorptionswerte zwischen 80 und 140 ml/100 g aufweisen.

Es hat sich gezeigt, daß herkömmliche Ruße die Temperaturabhängigkeit des Verlustfaktors tanδ nicht in ausreichendem Maße derart beeinflussen können, daß die Laufflächenmischung bei gleichem oder besserem Naßrutschverhalten einen geringeren Rollwiderstand aufweist. Die erwünschte Verringerung des Rollwiderstandes ist im allgemeinen direkt mit einer Verschlechterung des Naßrutschverhaltens gekoppelt. Ruße, die einen geringen Rollwiderstand aufweisen, werden als sogenannte "low hysteresis"-Ruße bezeichnet.

In den letzten Jahren wurde gezeigt, daß der Rollwiderstand von Reifen durch völliges oder teilweises Ersetzen des Rußes durch Kieselsäure vermindert werden kann (EP 0 447 066 A1). Um die Kieselsäure mit den Polymerbausteinen des Kautschuks zu verbinden, werden Silan-Kopplungsreagenzien benötigt. Kieselsäurehaltige Gummimischungen weisen einen um bis zu 50 % verminderten Verlustfaktor tanδ₆₀ auf.

Aus WO 96/37547 sind Elastomermischungen bekannt, die Elastomer und silizium haltigen Ruß enthalten, wobei der silizium haltige Ruß dem Elastomer schlechteren Abriebwiderstand, vergleichbaren oder höheren Verlustfaktor bei niedrigen Temperaturen und einen niedrigeren Verlustfaktor bei hohen Temperaturen verleiht, verglichen mit unbehandeltem Ruß.

Ferner ist aus WO 96/37447 eine Bindemittelzusammensetzung bekannt, die ein mineralisches Bindemittel und einen siliziumhaltigen Ruß enthält.

Aufgabe der vorliegenden Erfindung ist es, neuartige Ruße zur Verfügung zu stellen, die Gummimischungen aus Naturkautschuk oder Synthesekautschuk oder Mischungen davon einen verminderten Rollwiderstand bei gleichzeitig verbessertem Naßrutschverhalten und erhöhtem Abriebwiderstand verleihen.

Diese Aufgabe wird durch einen Ruß gelöst, welcher eine CTAB-Oberfläche zwischen 40 und 180 m²/g, eine 24M4-DBP-Absorption zwischen 40 und 140 ml/100 g und eine spezifische BET-Oberfläche zwischen 40 und 250 m²/g aufweist. Der Ruß ist dadurch gekennzeichnet, daß er 0,01 bis 15 Gew.-% Silizium und 0,01 bis 1 Gew.-% Stickstoff, bezogen auf sein Gesamtgewicht, enthält.

Das Silizium wird beim Herstellungsprozeß in die Rußaggregate eingebracht. Zu diesem Zweck können zum Beispiel siliziumhaltige Verbindungen in den Rußrohstoff eingemischt werden. Geeignete siliziumhaltige Verbindungen sind siliziumorganische Verbindungen wie Organosilane, Organochlorsilane, Kieselsäureester, Siloxane und Silazane. Insbesondere sind Siliziumtetrachlorid, Siloxane und Silazane geeignet. Bevorzugt werden Kieselsäuremethyl- oder ethylester, Siloxane und Silazane verwendet.

Die gewählte Ausgangsverbindung hat nur einen geringen Einfluß auf die Einbindung der Siliziumatome in die Rußaggregate. Mit der Röntgenphotoelektronenspektrometrie (XPS) und der Sekundärionenmassenspektrometrie (SIMS) kann gezeigt werden, daß die Siliziumatome oxydisch gebunden und in den Rußaggregaten homogen verteilt sind. Die oxidische Bindung besteht zum überwiegenden Teil aus Siliziumdioxid. Einen weiteren Anteil bilden Silanolgruppen. Während die Silanolgruppen sich im wesentlichen an der Oberfläche der Rußaggregate befinden, ist Siliziumdioxid gleichmäßig über den Querschnitt der Aggregate verteilt. Die siliziumhaltigen Gruppen an der Oberfläche der Rußaggregate beeinflussen nach Einarbeitung in Gummimischungen die Wechselwirkung des Füllstoffes mit den polymeren Kautschukkomponenten. Zur kovalenten Anbindung der Silanolgruppen der Ruße an die Mischungspolymere können den Gummimischungen bifunktionelle Silane wie zum Beispiel Si69 (Bis(3-triethoxysilylpropyl)tetrasulfan) von Degussa als Kupplungsreagenz zugemischt werden.

Bei Verwendung stickstoffhaltiger Siliziumverbindungen, wie zum Beispiel der Silazane, finden sich im Ruß neben den oxydisch gebundenen Siliziumatomen auch Stickstoffatome in Form aminofunktioneller Gruppen wieder. Solche Ruße können je nach Stickstoffgehalt der Ausgangsverbindungen und ihrer Konzentration im Rußrohstoff 0,01 bis 1 Gew.-% Stickstoff enthalten.

Die mit den neuartigen Rußen hergestellten Laufflächenmischungen zeigen bereits ohne Zusatz eines Kupplungsreagenzes einen erhöhten Wert von tanδ₀ und einen verminderten Wert von tanδ₆₀ gegenüber konventionellen Vergleichsrußen, d. h. Rußen gleicher Teilchengröße und Struktur aber ohne Siliziumgehalt. Diese Werte entsprechen einem deutlich verbesserten Naßrutschverhalten bei gleichzeitig deutlich vermindertem Rollwiderstandsbeitrag der Lauffläche.Durch Zusatz bifunktioneller Silane läßt sich ähnlich wie bei Kieselsäuren das Eigenschaftsbild der Gummimischungen weiter verbessern.

Für die Herstellung der Ruße eignen sich das Furnaceruß-Verfahren, das Gasruß-Verfahren und das Flammruß-Verfahren. Ruße für die Reifenindustrie werden heute fast ausschließlich nach dem Furnaceruß-Verfahren hergestellt. Deshalb wird im folgenden die Herstellung der erfindungs-gemäßen Ruße anhand dieses Verfahrens erläutert.

Gemäß dem Furnaceruß-Verfahren wird die oxidative Pyrolyse des Rußrohstoffes in einem mit hochfeuerfestem Material ausgekleideten Reaktor durchgeführt. In einem solchen Reaktor können drei Zonen voneinander unterschieden werden, die längs der Reaktorachse hintereinander liegen und nacheinander von den Reaktionsmedien durchströmt werden.

Die erste Zone, die sogenannte Verbrennungszone, umfaßt im wesentlichen die Brennkammer des Reaktors. Hier wird ein heißes Prozeßgas erzeugt, indem ein Brennstoff, in der Regel Kohlenwasserstoffe, mit einem Überschuß von vorgewärmter Verbrennungsluft oder anderen sauerstoffhaltigen Gasen verbrannt wird. Als Brennstoff wird heute überwiegend Erdgas verwendet, aber auch flüssige Kohlenwasserstoffe wie leichtes und schweres Heizöl können eingesetzt werden. Die Verbrennung des Brennstoffes erfolgt gewöhnlich unter Sauerstoffüberschuß. Der Luftüberschuß fördert dabei den vollständigen Umsatz des Brennstoffes und dient zur Steuerung der Rußqualität. Der Brennstoff wird gewöhnlich mittels einer oder mehrerer Brennerlanzen in die Brennkammer eingeführt.

In der zweiten Zone des Rußreaktors, der sogenannten Reaktionszone oder Pyrolysezone, findet die Rußbildung statt. Dazu wird der Rußrohstoff, im allgemeinen ein sogenanntes Rußöl, in den Strom des heißen Prozeßgases injiziert und eingemischt. Bezogen auf die in der Verbrennungszone nicht vollständig umgesetzte Sauerstoffmenge ist die in der Reaktionszone eingebrachte Kohlenwasserstoffmenge im Überschuß. Daher setzt hier normalerweise die Rußbildung ein.

Rußöl kann auf verschiedene Art in den Reaktor injiziert werden. Geeignet ist zum Beispiel eine axiale Ölinjektionslanze oder eine, beziehungsweise mehrere, radiale Öllanzen, die in einer Ebene senkrecht zur Strömungsrichtung auf dem Umfang des Reaktors angeordnet sind. Ein Reaktor kann längs der Strömungsrichtung mehrere Ebenen mit radialen Öllanzen aufweisen. Am Kopf der Öllanzen befinden sich entweder Sprüh- oder Spritzdüsen, mit denen das Rußöl in den Strom des Prozeßgases eingemischt wird.

Bei gleichzeitiger Verwendung von Rußöl und gasförmigen Kohlenwasserstoffen, wie zum Beispiel Methan, als Rußrohstoff, können die gasförmigen Kohlenwasserstoffe getrennt vom Rußöl über einen eigenen Satz von Gaslanzen in den Strom des heißen Abgases injiziert werden.

In der dritten Zone des Rußreaktors, der sogenannten Abbruchzone (Quenchzone), wird die Rußbildung durch schnelles Abkühlen des rußhaltigen Prozeßgases abgebrochen. Dadurch werden unerwünschte Nachreaktionen vermieden. Solche Nachreaktionen würden zu porösen Rußen führen. Den Reaktionsabbruch erreicht man gewöhnlich durch Einsprühen von Wasser mittels geeigneter Sprühdüsen. Meist weist der Rußreaktor mehrere Stellen längs des Reaktors für das Einsprühen von Wasser, beziehungsweise "Quenchen", auf, so daß man die Verweilzeit des Rußes in der Reaktionszone variieren kann. In einem nachgeschalteten Wärmetauscher wird die Restwärme des Prozeßgases genutzt, um die Verbrennungsluft und das Rußöl vorzuwärmen.

Die erfindungsgemäßen Ruße können hergestellt werden, indem die beschriebenen siliziumhaltigen Verbindungen in die Rußrohstoffe eingemischt oder separat in die Brennkammer oder die Pyrolysezone des Rußreaktors eingesprüht werden. Das Einmischen der siliziumhaltigen Verbindungen in das Rußöl kann in Form einer Lösung erfolgen, wenn die Verbindungen im Rußöl löslich sind oder in Form einer Emulsion. Durch diese Maßnahmen wird ein homogener Einbau der Siliziumatome in die Rußprimärteilchen erreicht. Zum separaten Einsprühen der siliziumhaltigen Verbindungen in die Pyrolysezone des Rußreaktors können eine oder mehrere der normalerweise für das Einsprühen des Rußrohstoffes verwendeten Öllanzen benutzt werden.

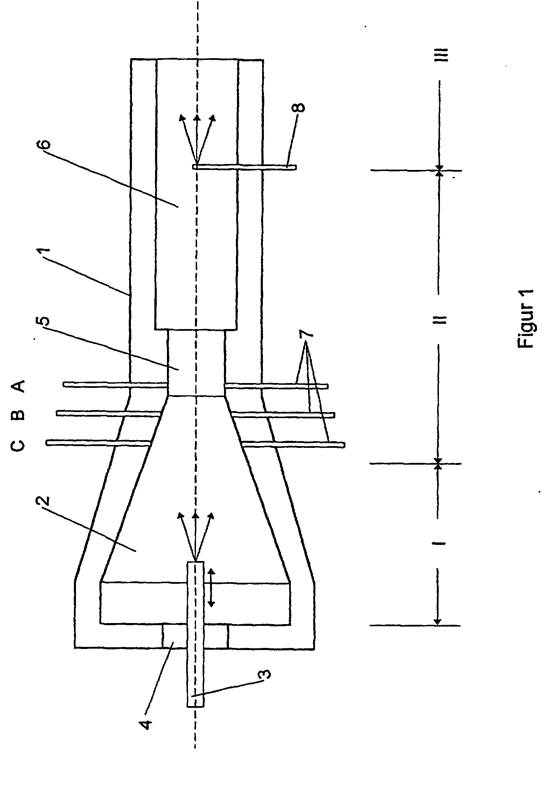

Die Erfindung wird nun anhand einiger Beispiele näher erläutert. Es zeigen
- Figur 1:: einen Längsschnitt durch den für die Herstellung der erfindungsgemäßen Ruße benutzten Reaktor.

### Beispiele

Es wurde eine Reihe von erfindungsgemäßen Rußen in dem in Figur 1 dargestellten Rußreaktor 1 hergestellt. Er besitzt eine Brennkammer 2, in der das heiße Prozeßgas für die Pyrolyse des Rußöles durch Verbrennen von Öl unter Zufuhr von einem Überschuß an Luftsauerstoff erzeugt wird. Der Brennstoff wird über die axiale Brennerlanze 3 in die Brennkammer eingeführt.

Die Zufuhr der Verbrennungsluft erfolgt über die Öffnung 4 in der Stirnwand der Brennkammer. Die Brennkammer läuft konisch auf die Engstelle 5 zu. Nach Durchqueren der Engstelle expandiert das Reaktionsgasgemisch in die Reaktionskammer 6.

Mit A, B und C sind verschiedene Positionen für die Injektion des Rußöles in das heiße Prozeßgas mittels der Öllanzen 7 bezeichnet. Die Öllanzen weisen an ihrem Kopf geeignete Sprühdüsen auf. An jeder Injektionsposition sind 4 Injektoren über den Umfang des Reaktors verteilt.

Die für das erfindungsgemäße Verfahren wichtige Verbrennungszone, Reaktionszone und Abbruchzone sind in Figur 1 durch die römischen Ziffern I bis III gekennzeichnet. Sie können nicht scharf voneinander getrennt werden. Ihre axiale Ausdehnung hängt von der jeweiligen Positionierung der Brennerlanze, der Öllanzen und der Quenchwasser-Lanze 8 ab.

Die Abmessungen des verwendeten Reaktors sind der folgenden Aufstellung zu entnehmen:

| | | |
|---|---|---|
| Größter Durchmesser der Brennkammer | | 120 mm |
| Länge der Brennkammer bis Engstelle | | 470 mm |
| Länge des konischen Teils der Brennkammer | | 220 mm |
| Durchmesser der Engstelle | | 60 mm |
| Länge der Engstelle | | 100 mm |
| Durchmesser der Reaktionskammer | | 200 mm |
| Position der Öllanzen ¹⁾ | A | 60 mm |
| | B | -48 mm |
| | C | -111 mm |
| Position der Quenchwasserlanze(n) ¹⁾ | | ≈ 400 - 3000 mm |

| | | |
|---|---|---|
| ¹⁾ gemessen vom Eintritt in die Engstelle (+: nach Eintritt -: vor Eintritt) | | |

Alle in dem beschriebenen Reaktor hergestellten Ruße wurden vor der Charakterisierung und Einarbeitung in die Gummimischungen nach den üblichen Verfahren trocken geperlt.

Zur Herstellung der erfindungsgemäßen Ruße wurden als Brennstoff Erdgas und ein Rußöl mit einem Kohlenstoffgehalt von 93,4 Gew.-% und einem Wasserstoffgehalt von 5,9 Gew.-% eingesetzt.

Die Reaktorparameter für die Herstellung der erfindungsgemäßen Ruße sind in Tabelle 1 aufgeführt. Es wurden 4 verschiedene Ruße bei im wesentlichen gleichen Reaktorparametern hergestellt (Ruße R1 bis R3 sowie Vergleichsruß N234). Die Herstellbedingungen unterschieden sich lediglich in der Menge des dem Rußöl beigemischten Hexamethyldisilazans (HMDS) als siliziumhaltiger Verbindung.

Für die erfindungsgemäßen Ruße R1 bis R3 wurde die Dosierung so gewählt, daß die fertigen Ruße 1, 2 und 6,5 Gew.-% Silizium enthielten.

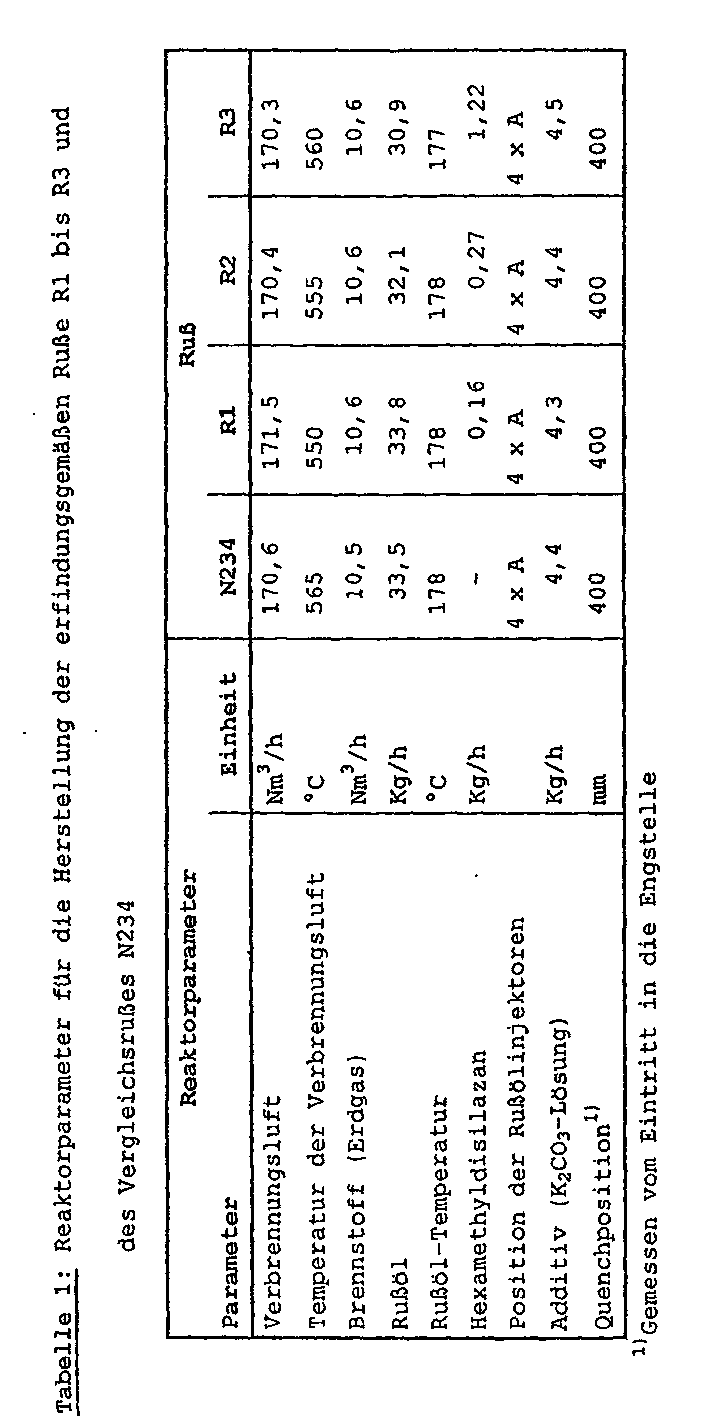

Die rußanalytischen Kenndaten der hergestellten Ruße wurden nach folgenden Normen ermittelt und sind in Tabelle 2 aufgeführt:

| | |
|---|---|
| CTAB-Oberfläche | ASTM D-3765 |
| DBP-Absorption | ASTM D-2414 |
| 24M4-DBP-Abbsorption | ASTM D-3493 |

**Tabelle 2 :**

| rußanalytische Kenndaten | | | | |
|---|---|---|---|---|
| **Ruß** | **CTAB [m**^{**2**}**/g]** | **DBP [ml/100g]** | **24M4-DBP [ml/100g]** | **Si [Gew.-%]** |
| N234 | 122 | 128 | 90 | 0 |
| R1 | 127 | 130 | 92 | 1 |
| R2 | 125 | 132 | 93 | 2 |
| R3 | 124 | 128 | 90 | 6,5 |

### Anwendungsbeispiel

Die Ruße R1 bis R3 sowie der Vergleichsruß N234 wurden zur Herstellung von Gummimischungen verwendet. An den Gummimischungen wurden die viskoelastischen Eigenschaften bestimmt.

Die viskoelastischen Eigenschaften der mit diesen Rußen verstärkten Gummimischungen wurden nach DIN 53513 bestimmt. Es wurden insbesondere die Verlustfaktoren tanδ bei 0°C und bei 60°C ermittelt. Die für die Gummimischungen verwendete Testrezeptur ist in Tabelle 4 aufgeführt.

**Tabelle 3**

| SSBR/BR-Testrezeptur | |
|---|---|
| **Mischungs-Komponente** | **Gehalt [phr]** |
| SSBR | 96,0 |
| BR | 30,0 |
| Ruß | 80,0 |
| ZnO RS | 3,0 |
| Stearinsäure | 2,0 |
| aromatisches Öl | 10,0 |
| 6 PPD | 1,5 |
| Wachs | 1,0 |
| CBS | 1,5 |
| DPG | 2,0 |
| TMTD | 0,2 |
| Schwefel | 1,5 |
| Silankopplungsreagenz Si69 | wahlweise |

Bei der SSBR Kautschukkomponente handelt es sich um ein in Lösung polymerisiertes SBR-Copolymer mit einem Styrolgehalt von 25 Gew.-% und einem Butadiengehalt von 75 Gew.-%. Von dem Butadien sind 73 Gew.-% 1,2, 10 Gew.-% cis 1,4 und 17 Gew.-% trans 1,4 verknüpft. Das Copolymer enthält 37,5 phr Öl und wird unter dem Handelsnamen Buna VSL 1955 S 25 von Bayer AG vertrieben. Seine Mooney-Viskosität (ML 1+4/100°C) beträgt etwa 50.

Bei der BR Kautschukkomponente handelt es sich um ein cis 1,4-Polybutadien (Titantyp) mit einem cis 1,4-Gehalt von 92 Gew.-%, einem trans 1,4-Gehalt von 4 Gew.-%, einem 1,2-Gehalt von 4 Gew.-% und einer Mooney-Viskosität zwischen 44 und 50. Diese Komponente wird unter dem Handelsnamen Buna CB 24 von der Bayer AG vertrieben.

Als aromatisches Öl wurde Naftolen ZD von Chemetall verwendet. Bei dem PPD-Anteil der Testrezeptur handelte es sich um Vulkanox® 4020 und bei dem CBS-Anteil um Vulkacit® CZ,bei DPG um Vulkacit® D und bei TMTD um Vulkacit® Thiuram, alle von der Bayer AG. Als Wachs wurde Protector® G35 von der HB-Fuller GmbH eingesetzt.

Die Einarbeitung der Ruße in die Gummimischung wurde in drei Stufen entsprechend der folgenden tabellarischen Aufstellung vorgenommen:

| **Stufe 1** | | |
|---|---|---|
| **Einstellungen** | | |
| Mischaggregat | | Werner & Pfleiderer GK 1,5 N |
| Friktion | | 1:1,11 |
| Drehzahl | | 70 min⁻¹ |
| Stempeldruck | | 5,5 bar |
| Leervolumen | | 1,6 l |
| Füllgrad | | 0,7 |
| Durchflußtemp. | | 80°C |

| **Mischvorgang** | | |
|---|---|---|
| 0 bis 2 min | | Buna VSL 1955 S25 + Buna CB 24 |
| 2 bis | 4 min | Ruß + ZnO RS + Stearinsäure + Naftolen ZD + ggf. Si69 |
| | | Vulkanox 4020 + Protector G35 |
| | 4 min | säubern |
| 4 bis 8 min | | mischen und ausfahren |
| | | |
| Batch-Temp. | | 140-150°C |
| Lagerung | | 4 h bei Raumtemperatur |

| **Stufe 2** | | |
|---|---|---|
| **Einstellungen** | | |
| Mischaggregat | | wie in Stufe 1 bis auf |
| Füllgrad | | 0,68 |

| **Mischvorgang** | | |
|---|---|---|
| 0 bis | 2 min | Batch von Stufe 1 aufbrechen |
| | 2 min | ausfahren |
| | | |
| Batch-Temp. | | <150°C |
| Lagerung | | keine |

| **Stufe 3** | | |
|---|---|---|
| **Einstellungen** | | |
| Mischaggregat | | wie in Stufe 1 bis auf |
| Füllgrad | | 0,65 |

| **Mischvorgang** | | |
|---|---|---|
| 0 bis | 1,5 min | Batch von Stufe 2 + Vulkacit CZ + Vulkacit D und Vulkacit Thiuram + Schwefel |
| | | |
| | 1,5 min | ausfahren und auf Labormischwalzwerk (Durchmesser 200 mm, Länge 450 mm, Durchflußtemperatur 50°C) Fell bilden. |
| | | Zum Homogenisieren dann: |
| | | 3 x links und 3 x rechts einscheiden und umklappen sowie |
| | | 8 x bei engem Walzenspalt (1 mm) und 3 x bei breitem Walzenspalt (3,5 mm) stürzen und anschließend Fell ausziehen. |

Die anschließende Bestimmung der gummitechnischen Eigenschaften, das heißt Shore-Härte, Spannungswerte M100 und M300, Rebound bei 0 und 60°C sowie Verlustfaktor tanδ bei 0 und 60°C und der dynamische Dehnmodul |E*| bei 0°C, erfolgte gemäß den aufgeführten Normen. Die Meßbedingungen für die viskoelastischen Eigenschaften sind in Tabelle 4 zusammengestellt.

**Tabelle 4**

| Bestimmung der viskoelastischen Eigenschaften gemäß DIN 53513 | |
|---|---|
| **Vulkanisation der Probenkörper** | |
| Vulkanisations-Temperatur | 165°C |
| Vulkanisations-Dauer | T₉₅ + 3 min (T₉₅:DIN 53529) |

| **Probenkörperform** | |
|---|---|
| Form | zylindrisch |
| Länge | 10 mm |
| Durchmesser | 10 mm |
| Anzahl | 5 |

| **Prüfmaschine** | |
|---|---|
| Typ/Hersteller | 830/MTS |
| Art der Beanspruchung | Dehnung |
| Mittlere Kraftamplitude | 50 N |
| Dynamische Kraftamplitude | ± 25 N |
| Prüffrequenz | 16 Hz |
| **Prüfablauf** | 5 min temperieren dann dynamische Belastung bei 16 Hz für die Dauer von 2 min mit nachfolgender Messung |

Verwendet wird jeweils der Medianwert der Messungen an den fünf Probekörpern.

Die Ergebnisse der gummitechnischen Untersuchungen sind in Tabellen 5 aufgelistet. Die erfindungsgemäßen Ruße zeigen das typische Verhalten von sogenannten Inversionsrußen. Gegenüber dem Vergleichsruß verleihen sie den Gummimischungen einen verminderten Verlustfaktor bei 60°C und einen erhöhten Verlustfaktor bei 0°C. Von aus solchen Gummimischungen hergestellten Reifen ist also ein verbessertes Naßrutschverhalten bei gleichzeitig vermindertem Rollwiderstand zu erwarten.

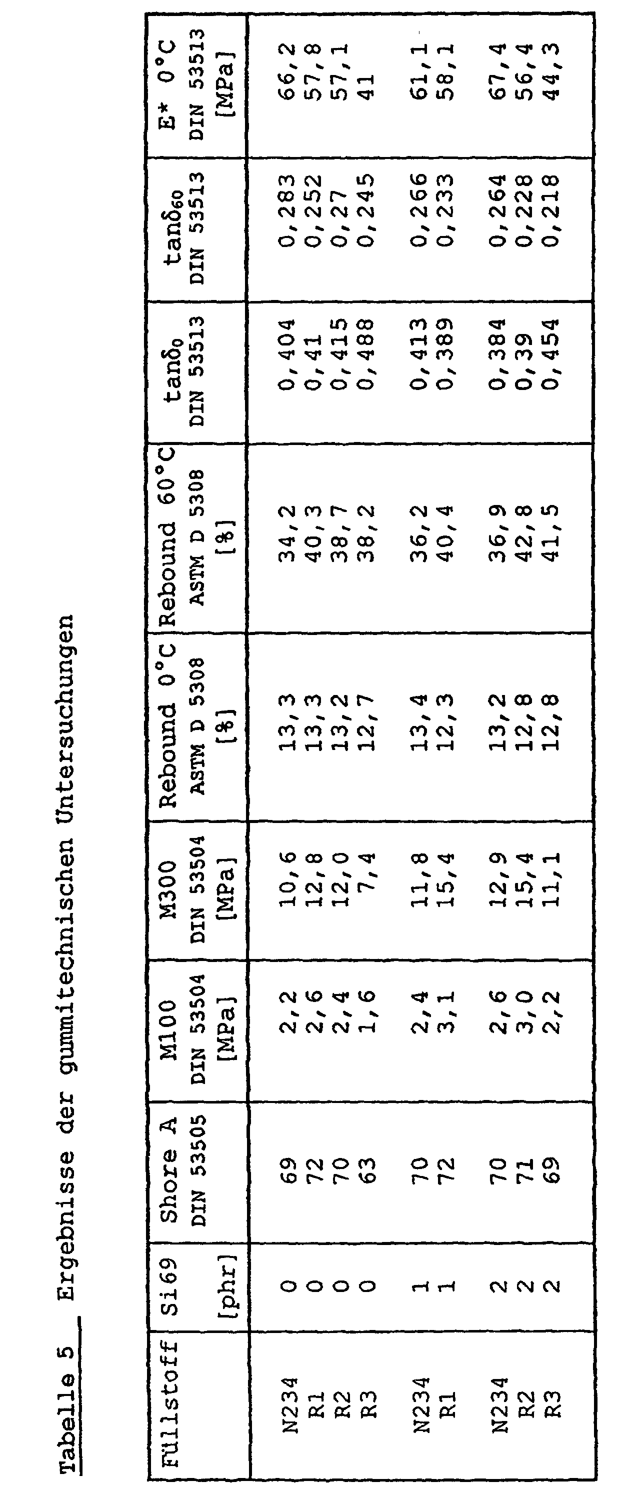

## Patentansprüche

1. Ruß mit einer CTAB-Oberfläche zwischen 40 und 180 m²/g, einer 24M4-DBP-Absorption zwischen 40 und 140 ml/100 g und einer spezifischen BET-Oberfläche zwischen 40 und 250m²/g,
**dadurch gekennzeichnet,**
**daß** er 0,01 bis 15 Gew.-% Silizium und 0,01 bis 1 Gew.-% Stickstoff, bezogen auf sein Gesamtgewicht, enthält.

2. Verfahren zur Herstellung eines Rußes nach Anspruch 1 durch oxidative Pyrolyse von kohlenstoffhaltigen Rußrohstoffen,
**dadurch gekennzeichnet,**
**daß** den kohlenstoffhaltigen Rußrohstoffen siliziumhaltige Verbindungen zugemischt werden, die Stickstoff enthalten.

3. Verfahren zur Herstellung eines Rußes nach Anspruch 1 durch oxidative Pyrolyse von kohlenstoffhaltigen Rußrohstoffen,
**dadurch gekennzeichnet,**
**daß** siliziumhaltige Verbindungen, die Stickstoff enthalten, in die Brennkammer oder Reaktionskammer des Rußreaktors eingesprüht werden.

4. Verfahren nach einem der Ansprüche 2 bis 3,
**dadurch gekennzeichnet,**
**daß** als siliziumhaltige Verbindungen siliziumorganische Verbindungen wie Organosilane, Organochlorsilane, Kieselsäureester, Siloxane oder Silazane verwendet werden.

5. Verwendung des Rußes nach Anspruch 1 als Verstärkerruß in Gummimischungen für Reifen mit vermindertem Rollwiderstand und verbessertem Naßrutschverhalten.

## Claims

1. Carbon black with a CTAB surface area of between 40 and 180 m²/g, a 24M4 DBP absorption of between 40 and 140 ml/100 g and a specific BET surface area of between 40 and 250 m²/g,
**characterised in that**
it contains 0.01 to 15 wt.% silicon and 0.01 to 1 wt.% nitrogen, relative to its total weight.

2. Process for the manufacture of a carbon black according to claim 1 by oxidative pyrolysis of carbon-containing carbon black raw materials,
**characterised in that**
silicon-containing compounds containing nitrogen are admixed to the carbon-containing carbon black raw materials.

3. Process for the manufacture of a carbon black according to claim 1 by oxidative pyrolysis of carbon-containing carbon black raw materials,
**characterised in that**
silicon-containing compounds containing nitrogen are sprayed into the combustion chamber or reaction chamber of the carbon black reactor.

4. Process according to one of claims 2 or 3,
**characterised in that**
organosilicon compounds such as organosilanes, organochlorosilanes, silicic acid esters, siloxanes or silazanes are used as silicon-containing compounds.

5. Use of the carbon black according to claim 1 as a reinforcing carbon black in rubber compounds for tyres with reduced rolling resistance and improved wet-slip properties.

## Revendications

1. Noir de carbone ayant une surface CTAB comprise entre 40 et 180 m²/g, une absorption 24M4-DBP comprise entre 40 et 140 ml/100 g et une surface BET spécifique comprise entre 40 et 250 m²/g,
**caractérisé en ce qu'**
il contient de 0,01 à 15 % en poids de silicium et de 0,01 à 1 % en poids d'azote, par rapport à son poids total.

2. Procédé de production d'un noir de carbone selon la revendication 1 par une pyrolyse avec oxydation de matières premières de noir de carbone contenant du carbone,
**caractérisé en ce qu'**
on mélange aux matières premières de noir de carbone contenant du carbone, des composés contenant du silicium, qui contiennent de l'azote.

3. Procédé de production d'un noir de carbone selon la revendication 1 par une pyrolyse par oxydation de matières premières de noir de carbone contenant du carbone,
**caractérisé en ce qu'**
on pulvérise les composés contenant du silicium, qui contiennent de l'azote, dans la chambre de combustion ou la chambre de réaction du réacteur à noir de carbone.

4. Procédé selon l'une des revendications 2 à 3,
**caractérisé en ce qu'**
on utilise comme composés contenant du silicium des composés organosiliciques comme les organosilanes, les organochlorosilanes, les esters de l'acide siliciques, les siloxanes ou les silazanes.

5. Utilisation du noir de carbone selon la revendication 1, comme noir de carbone de renforcement dans les mélanges de caoutchoucs pour pneumatiques à résistance au roulement réduite et à comportement de dérapage à l'humidité amélioré.
